Europäisches Patentamt

European Patent Office

Office européen des brevets

(11) Publication number: **0 226 188 B1**

## EUROPEAN PATENT SPECIFICATION

(45) Date of publication of patent specification: **29.01.92**

(51) Int. Cl.⁵: **H01B 7/24**, H02G 1/10, H01R 13/56

(21) Application number: **86117307.8**

(22) Date of filing: **12.12.86**

(54) **Device for limiting the bending of a submarine cable portion.**

(30) Priority: **20.12.85 IT 2331685**

(43) Date of publication of application:
**24.06.87 Bulletin 87/26**

(45) Publication of the grant of the patent:
**29.01.92 Bulletin 92/05**

(84) Designated Contracting States:
**DE FR GB SE**

(56) References cited:
**GB-A- 2 089 140**
**GB-A- 2 142 788**

(73) Proprietor: **PIRELLI CAVI S.p.A.**
**Piazzale Cadorna, 5**
**I-20123 Milan(IT)**

(72) Inventor: **Magnani, Francesco**
**Via del Carmine 3/4**
**Pavia(IT)**
Inventor: **Invernizzi, Attilio**
**Via Battisti, 140**
**Carugate (Milan)(IT)**

(74) Representative: **Giannesi, Pier Giovanni et al**
**Pirelli S.p.A. Direzione Brevetti Piazzale**
**Cadorna, 5**
**I-20123 Milano(IT)**

Rank Xerox (UK) Business Services

## Description

The present invention concerns a device for limiting the bending radius of a submarine cable portion particularly, but not exclusively in correspondence of abrupt variations in the mechanical rigidity of the cable.

The invention finds application in submarine power cables and in telecommunication cables both, of the conventional type, as well of the type containing optical fibres.

These cables present abrupt variations in their mechanical rigidity, in correspondence of repeaters, joints, external reinforcing structures, etc., that could overstress the cable portions adjacent to the more rigid tract, with forcing them to undergo a very small bending radius, both during the partial winding and unwinding operations, prior to and during the laying of the cable, and during the execution of the joints in the already laid cable.

Stresses of an analogous type can be verified even on the laid cable if the cable does not result as being supported in a continuous manner.

There exist already known bending limiting devices, like the one descibed in GB-A-2,142,788, made of annular segments that are joined together by screws, for forming a tube.

The screws traverse the annular bodies at positions not far from their axis, and they are housed in seats which extend angularly in respect of the annular bodies' axis, for so allowing a limited possibility of rotation.

During the rotation between two adjacent annular bodies, one screw acts as a tie-rod, whereas the head of the diametrically opposed one can get into the angled seat till the annular bodies abut on the inner parts of the curvature.

Devices of such a kind are unsatisfactory since the bending and compressive stresses, applied to the screws, are very concentrated; since the angles of rotation, between the adjacent elements, are not easily controllable; since, in some areas, the annular bodies contact one another, during bending, with the possibility of crawlings between the parts.

Another known bending limiting device, described in GB-A-2,089,140, provides a flexible tubular body, whose stiffness vary along its lenght, which is locked at its ends to the cable portion to be protected, and is formed by a plurality of semicylindrical shells rigidly linked together.

The aim of the present invention is to realize a device for limiting the bending radius of a submarine cable portion, which proves to be simple to install and to put into operation, and which also has a uniform distribution of the compressive stresses during the reciprocal rotation of the elements constituting the device.

The invention consists of a device for limiting the bending radius of a submarine cable portion, comprising a plurality of elements, connected to one another, with allowance for a limited reciprocal rotation, each one of said elements comprising a tubular body and two terminal flanges, provided with circumferential through-holes for the passage of connecting members, each one of which comprises a cylindrical rod having its ends of a cross-section greater than the central portion of the rod and provided at the other end with a threading on which a nut is screwed, said device being characterized in that on one flange a spherical kern is provided in a diametrically opposed position to each through-hole, while, on the other flange, a spherical seat is provided for housing such a kern.

FIG. 1 - is a partially cross-sectioned view, of the cable according to the invention;

FIG. 2 - shows an enlarged detail of the cross-section of FIG. 1; and

FIGS. 3 and 4- respectively show a longitudinal section and a front view, of one of the tubular elements forming the device for limiting the bending radius.

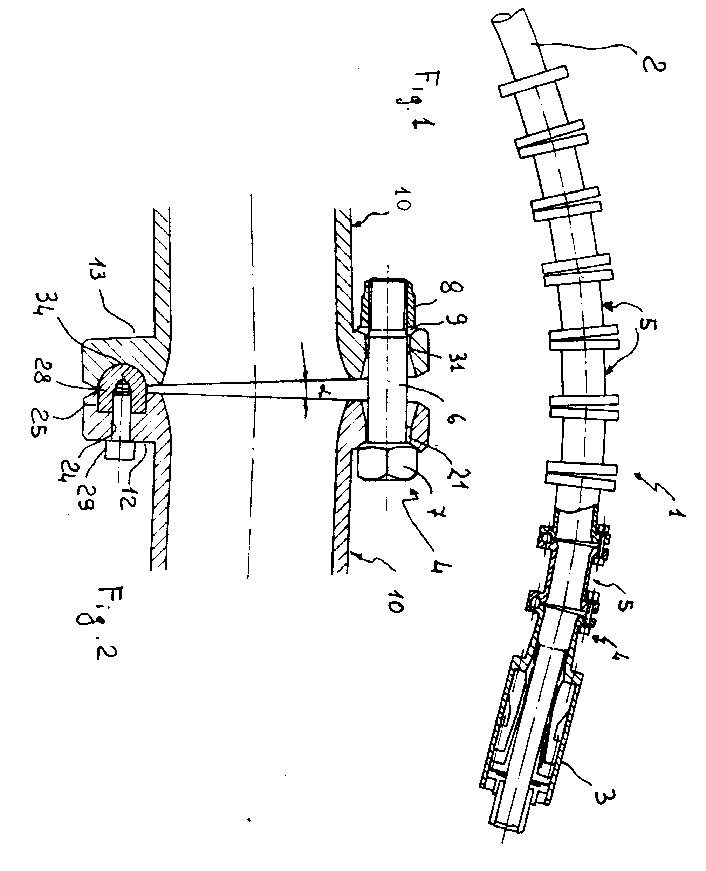

In FIG. 1, the device 1 for limiting the bending radius according to the invention, is shown as applied to a submarine cable portion 2, adjacent to a cylindrical casing 3 (partially visible in the figure), that houses, for example, a joint.

The limiting device according to the invention is formed by a plurality of tubular elements 5 connected to one another, in an articulated manner, and to one end of the casing 3 which results as being shaped in a complementary manner to them. An analogous limiting device can also be provided at the other end of the cylindrical casing 3.

The tubular elements 5 are sufficiently rigid (metallic, for example), and have the same length. Moreover, they are utilized in a number that is sufficient for realizing the length desired.

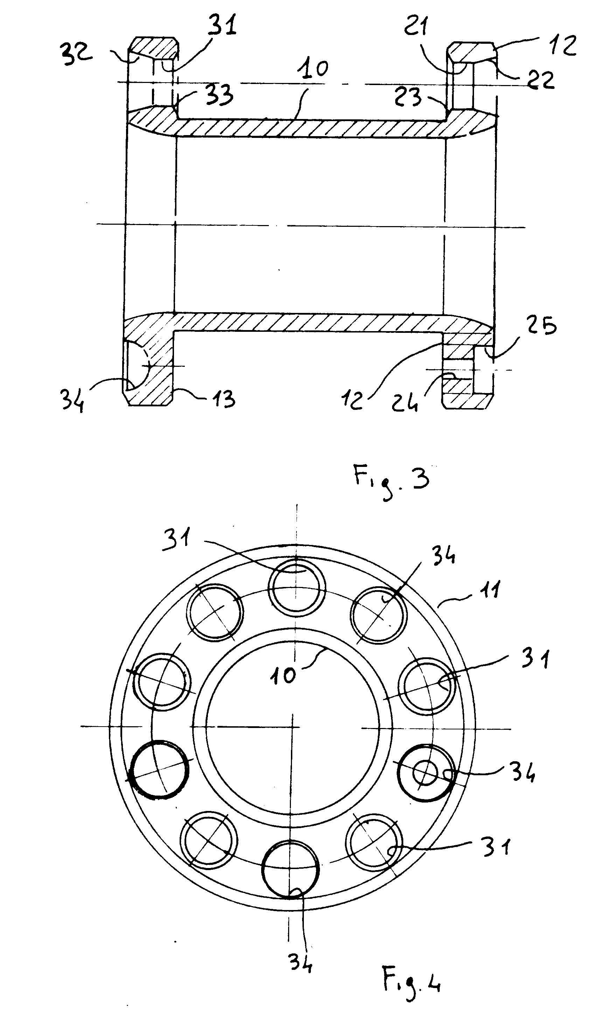

With referring to FIGS. 3 and 4, the structure of one of the elements 5, will now be described.

Each element 5 is formed by a tubular cylindrical body 10 whose inner diameter is greater than the outer diameter of the cable over which it must be applied, and by two terminal flanges 12 and 13 respectively.

As visible in FIG. 4, the flange 13 presents a plurality of holes 31, distributed circumferentially, and an equal number of seats 34 in the form of spherical recesses, diametrically opposed to the holes 31.

Each hole 31 results as being countersunk at both sides of the flange respectively in the tracts 32 and 33.

The countersunk tract 32 is longer than the countersunk tract 33 that lies on the side of the body 10.

The flange 12 presents the holes 21 axially aligned with the holes 31 and having an equal diameter, and similarly provided with analogous countersunk tracts 22 and 23 of which the first one is longer than the second.

In the diametrically opposed position to each hole 21 and therefore, aligned with seat 34 of flange 13, the flange 12 presents a hole 24 and a cylindrical seat 25 coaxial to it, forming an extension of the former on the part opposite to that of the body 10.

Referring to FIG. 2, there will now be described the connection between two adjacent tubular elements 5.

In FIG. 2, the connecting members between two adjacent tubular elements are formed by screws 4 that traverse the aligned holes 21 and 31 of two adjacent flanges.

The screw head 7 which is preferably rounded, or flanged, on the side facing the shaft 6, abuts against the countersunk tract 23 of the corresponding flange 12, while at the other end, a nut 8 is tightened upon the threaded end of the screw 4 and preferably, with the interpositioning of a spherical washer 9 that abuts against the corresponding countersunk tract 33 of the hole 31.

The screw 4 comprising the head 7, the nut 8 and eventually the washer 9, forms the connecting member wherein the screw body 6 forms the rod, whilst the ends of the greater section are formed, in this instance, respectively by the head 7 and by the nut 8 (in case, together with washer 9).

The connecting member could even be realized in different ways such as, for example, with a rod threaded at the ends and two nuts (with or without washers), having a cylindrical body to whose ends there are keyed portions having a greater width, etc.

The inner diameter of the holes 21 and 31 is greater than the diameter of the screw rod 6; moreover, the said rod has a greater length than the total thickness of the two flanges 12 and 13, so that two adjacent flanges are not tightened in contact with each other.

In the embodiment shown, wherein the connecting member is formed by a screw and nut, this means that the nut 8 will be screwed onto the threaded portion of the screw 6 in such a way that the two flanges do not result as being in contact.

Moreover, the flange 12 houses, in each cylindrical seat 25, a kern 28 having a spherical end, that results fixed to the flange by means of the screw 29 that is inserted into a threading inside the kern itself.

The kern 28 abuts against seat 34 and, although these two elements (28 and 34) are not included among the connecting means, between the tubular bodies 5, they nonetheless form part of the articulated joint, and keep the two portions spaced apart, since the kern 28 results as protruding for a greater length, into the depth of the complementary shaped seat 34.

The kern 28 connected with flange 12, and the seat 34 on flange 13, hence, constitute an articulated joint which is diametrically opposed to each connecting member that is formed by the screws 4 passing through the holes 31 and 21, in the same flange, and permits a limited rotation as is visible in FIG. 2 wherein there is indicated the angle $\alpha$ formed between the two flanges.

Said angle is generally of a few degrees, typically $4° - 5°$, and it represents the maximum angular mobility permitted by the structure of the device in the diametral plane, passing through the centers of the hole-and-seat pair 31 and 34.

Therefore the tubular elements 5 result as being articulated in different directions, as a function of the number of pairs of screws-articulated joints (five in the illustrated example).

Utilizing an articulated joint formed by a kern (or anyway, by a protuberance shaped like a spherical segment) and a corresponding curved seat, allows for distributing, over a considerably greater surface the compressive stresses exercised on this component.

On the contrary, in the prior art, the use of a screw in this position, resulted as being disadvantageous, since the screw was subjected to compressive stresses that could easily force it to yield, or to be deformed.

Although this invention has been described with particular reference to a preferred embodiment, it has not to be considered as being limited to the latter, but as also extending so as to include all those alternative variations and/or modifications which result as being obvious to anyone skilled in the art.

**Claims**

1. Device for limiting the bending radius of a submarine cable portion (2), comprising a plurality of elements (5) connected to one another with allowance for limited reciprocal rotation, each one of said elements (5) comprising a tubular body (10) and two terminal flanges (12, 13) provided with circumferential through-holes (21, 31) for the passage of connecting members each one of which comprises a cylindrical rod (6) having one end (7) of a cross-section greater than the central portion of the rod (6) and provided at the other end with a thread on which a nut (8) is screwed, said device being characterized in that on one flange (13) a spherical kern (28) is provided in a diametrical opposed position to each through-hole, while, on the other flange (12) a spherical seat (34) is provided for housing such a kern (28).

2. Device, according to claim 1, characterized by the fact that the cylindrical rod (6) has a lesser diameter than the diameter of the through-holes (21, 31).

3. Device, according to claim 2, characterized by the fact that the length of the portion of the cylindrical rod (6) comprised between the end (7) having a cross-section greater than the rod itself and the nut (8) screwed on said rod, is longer than the thickness of the two flanges (12, 13) which are crossed by the connecting member (5).

4. Device, according to claim 1, characterized by the fact of providing a spherical washer (9) between the nut and the flange.

5. Device, according to claim 1, characterized by the fact that each one of said through-holes (21, 31)provides for two tracts (22, 23) which are countersunk, respectively towards the tubular body (10) and the side opposite.

## Revendications

1. Dispositif destiné à limiter le rayon de courbure d'une partie (2) de câble sous-marin, comprenant plusieurs éléments (5) reliés entre eux en permettant une rotation réciproque limitée, chacun desdits éléments (5) comprenant un corps tubulaire (10) et deux brides terminales (12, 13) comportant des trous traversants circonférentiels (21, 31) pour le passage d'éléments de liaison dont chacun comprend une tige cylindrique (6) comportant une extrémité (7) d'une section transversale supérieure à la partie centrale de la tige (6) et comportant à l'autre extrémité un filetage sur lequel est vissé un écrou (8), ledit dispositif étant caractérisé en ce que, sur une bride (13), un élément sphérique en saillie (28) est disposé dans une position diamétralement opposée à chaque trou traversant alors que, sur l'autre bride (12), un siège sphérique (34) est ménagé pour loger un tel élément en saillie (28).

2. Dispositif selon la revendication 1, caractérisé par le fait que la tige cylindrique (6) est d'un diamètre moindre que le diamètre des trous traversants (21, 31).

3. Dispositif selon la revendication 2, caractérisé par le fait que la longueur de la partie de la tige cylindrique (6), comprise entre l'extrémité (7) dont la section transversale est supérieure à la tige elle-même et l'écrou (8) vissé sur ladite tige, est supérieure à l'épaisseur des deux brides (12, 13) qui sont traversées par l'élément de liaison (5).

4. Dispositif selon la revendication 1, caractérisé en ce qu'une rondelle sphérique (9) est disposée entre l'écrou et la bride.

5. Dispositif selon la revendication 1, caractérisé par le fait que chacun desdits trous traversants (21, 31) comporte deux zones (22, 23) qui sont chanfreinées au foret à fraiser, respectivement vers le corps tubulaire (10) et sur le côté opposé.

## Patentansprüche

1. Vorrichtung zum Begrenzen des Biegeradius eines Abschnittes (2) eines Unterwasserkabels, umfassend eine Mehrzahl von Elementen (5), die miteinander verbunden sind, wobei begrenzte hin- und hergehende Drehung zugelassen ist und wobei jedes Element (5) einen rohrförmigen Körper (10) und zwei Endflansche (12,13) aufweist, die auf einem Umfang mit durchgehenden Löchern (21,31) versehen sind für den Durchgang von Verbindungsteilen, deren jeder eine zylindrische Stange (6) aufweist, die an einem Ende (7) einen Querschnitt hat, der größer als der Querschnitt im mittleren Teil der Stange (6) ist, und die am anderen Ende mit einem Gewinde versehen ist, auf welches eine Mutter (8) geschraubt ist, dadurch **gekennzeichnet,** daß an dem einen Flansch (12) ein sphärischer Kern oder Einsatz (28) vorgesehen ist in einer Position diametral gegenüber jedem durchgehenden Loch, während an dem anderen Flansch (13) ein sphärischer Sitz (34) vorgesehen ist zum Aufnehmen eines solchen Einsatzes oder Kernes (28).

2. Vorrichtung nach Anspruch 1, dadurch gekennzeichnet, daß die zylindrische Stange (6) einen Durchmesser hat, der kleiner als der Durchmesser der durchgehenden Löcher (21,31) ist.

3. Vorrichtung nach Anspruch 2, dadurch gekennzeichnet, daß die Länge des Abschnitts der zylindrischen Stange (6) zwischen ihrem Ende (7), welches einen größeren Querschnitt als die Stange selbst hat, und der auf die Stange geschraubten Mutter (8) größer ist als die Dikke der beiden Flansche (12,13), durch die der Verbindungsteil (6) hindurchgeht.

4. Vorrichtung nach Anspruch 1, dadurch gekennzeichnet, daß zwischen der Mutter und dem Flansch eine sphärische Scheibe (9) vorgesehen ist.

5. Vorrichtung nach Anspruch 1, dadurch gekennzeichnet, daß jedes durchgehende Loch (21,31) zwei Abschnitte (22,23) aufweist, die in Richtung gegen den rohrförmigen Körper (10) bzw. zur entgegengesetzten Seite angesenkt sind.

Fig. 1

Fig. 2

Fig. 3

Fig. 4